# EUROPEAN PATENT SPECIFICATION

(11) **EP 2 312 956 B1**
(45) Date of publication and mention of the grant of the patent: **05.11.2014**
(21) Application number: 08772199.9
(22) Date of filing: 27.06.2008
(51) Int. Cl.: A21D 13/00, A23K 1/16, A23L 1/00, A23L 1/30, A23L 1/302, A23P 1/08, A23P 1/12

(54) **DIMPLED FOOD PRODUCT**
NAHRUNGSMITTELPRODUKT MIT VERTIEFUNGEN
PRODUIT ALIMENTAIRE ALVÉOLÉ

(43) Date of publication of application: 27.04.2011
(73) Proprietor: Mars, Incorporated, McLean, VA 22101-3383 (US)
(72) Inventor: SLUSARCZYK, Peter, Sebastian, McLean, Virginia 22101 (US); ZIENER, Tracey, Dianne, McLEan, Virginia 22101 (US); WANG, Yijun, McLean, Virginia 22101 (US); SHIELDS, Francis, S., McLean, Virginia 22101 (US)
(74) Representative: Cornish, Kristina Victoria Joy
(86) International application number: PCT/US2008/068649
(87) International publication number: WO 2009/157950

(56) References cited:
- EP-A- 0 848 909
- EP-A- 1 133 928
- EP-A- 1 388 293
- FR-A- 2 752 508
- US-A- 4 847 098
- ANONYMOUS: "Spinach & Three Cheese Stuffed Pasta Shells" SP RECIPES: SAVOURY, [Online] 10 April 2008 (2008-04-10), pages 1-3, XP002500976 Retrieved from the Internet: URL:http://asweetpea.wordpress.com/2008/04 /10/spinach-three-cheese-stuffed-pasta-she lls/> [retrieved on 2008-10-23]

## Description

### Field of the Invention

The present disclosure relates to food products comprising a plurality of surface pockets. In particular, the food products comprise a plurality of cavities in a base food material that can be filled with a filling food material, such that at least a portion of the filling food is not wholly encompassed by the base food material. The present disclosure also relates to methods for preparing the food products of the invention, where a filling food material is applied to a shaped base food material and the subsequently formed composite food material is closed to form a food product having two closed ends and a plurality of open surface pockets each optionally filled with the filling food material.

### Background of the Invention

Semi-moist edible products are known in the art. Such products, for example, include those made by adding a water-based soft component to a dry component. The water-based component is typically stabilized using a variety of gelling agents, sugars, salts, glycols, and/or by using heat.

EP-A-1388293 describes a multicomponent food product and methods of making and using the same.

EP-A-1133928 describes a process for making snack foods from dehydrated potato shreds and having multiple filled axial cavities by means of extrusion.

FR 2752508 (A1) describes a cooked dish comprising cooked meat stuffed and cooked lentils.

EP-A-0848909 describes a procedure for preparing a food product with varying dough volumes.

Online recipes 10 April 2008, XP002500976, pages 1-3 describes spinach and three cheese stuffed pasta shells.

U.S. Pat. No. 4,190,679 describes a dual-textured pet food containing a soft moist meaty portion containing 5-25% moisture with a water activity of 0.5-0.90. U.S. Pat. No. 3,916,029 describes a center filled pet food having a semi-moist inner matrix in an outer pastry shell. The inner matrix has a moisture content of 15-40% by weight and a water activity below about 0.85. Antimycotic agents are required to prevent mold growth. U.S. Pat. No. 3,922,353 relates to a center-filled product which has a meat-based filling having a water activity greater than about 0.90 and a water content greater than about 50% by weight. Pressure cooking, acidification and antimycotics are required. U.S. Pat. No. 4,006,266 relates to a two-component pet food having a soft component made of water, sugar, proteninanceous adhesive, animal protein source, vegetable protein source, fat, and a plasticizing agent. The soft component has between 11-14% moisture and a water activity of 0.60-0.75, and is subjected to elevated temperatures of 180 - 215 °F.

U.S. Pat. No. 4,508,741 describes a pet food having a doubly-coated core. The core is made primarily of a farinaceous material. U.S. Pat. No. 4,847,098 describes a dual textured food article having a relatively hard phase in contact with a relatively soft phase. The soft phase is a low fat content, water-in-oil emulsion made of a dispersed aqueous or syrup phase, at least one emulsifier, and a minor continuous oil phase. Ingredients for the soft portion include water, various grain and meat solids, propylene glycol, and high fructose corn syrup to help control water activity. U.S. Pat. No. 4,900,572 describes a dual textured pet food that is made by co-extrusion. The soft textured inner component is subjected to heat and pressure and has water added for expansion. U.S. Pat. No. 4,795,655 is a dual portion pet food in which an inner portion is softer than the outer hard dry portion. The soft portion contains egg solids, flour, meal, sugar and 30-40 wt % water. The finished product is baked to ensure stability. U.S. Pat. No. 4,364, 925 is a dual textured dog chew designed to provide a long life bone that is molded into various shapes and may include baking to promote chewing. As disclosed in this patent, cellulosic, collagen and protein fibers are combined with a cowhide derived binder to form a hard composition. The soft composition is not well defined.

U.S. Pat. No. 5,695,797 describes a coextruded pet food product in which the outer casing has a moisture content of between 20% and 40% and the filling represents between 30% and 40% of the total volume. The product requires a preservative such as phosphoric acid, an additive to lessen the action of the water, an anti-mold ingredient, and an antioxidant because the product of U.S. Pat. No. 5,695,797 has a high moisture content.

U.S. Pat. Nos. 5,641,529 and 5,449,281 describe various equipment for preparing shaped co-extruded products and three-dimensional shapes.

U.S. Pat. No. 4,273,788 describes a bulk mixture of hard and soft pet foods. The hard food is in the form of chunks and the soft food is in the form of slender strands. The soft strands are described as being semi-moist. Water is added to the soft composition prior to extrusion. The extruded composition is subject to an elevated temperature of approximately 215-280 °F., thereby lowering the moisture content to about 11-14%.

U.S. Pat. No. 4,574,690 describes an apparatus and process for producing a co-extruded food product having a filling food material surrounded by a molded food material. U.S. Pat. No. 4,025,260 describes a food extrusion capable of producing a curled food particle having a meat filling covered with dough. U.S. Pat. No. 5,208,059 describes an apparatus and a method to produce dual textured food pieces. The food pieces have cavities filled with a heated, pumpable food material.

U.S. Pat. No. 5,194,283 describes a composite cheese product having a covered core. The core is relatively softer than the outer covering layer. Both the outer layer and inner core are cheeses and thus are both high-fat compositions. The inner core is made softer than the outer layer by increasing the fat content of the inner core.

U.S. Pat. No. 5,643,623 and International Patent Publication No. WO 96/39869 describe a health food product containing a lipid-based core used to deliver blends of antioxidants such as alpha-carotene, beta-carotene, phytofluene, phytoene, vitamin C, vitamin E, or curcumin. The antioxidants are fat soluble and are incorporated into the lipid-based core.

The prior art products are not able to function as a delivery system for various nutritional, functional, or pharmaceutical additive ingredients because the prior art requires significant heat processes and/or acidic conditions that would alter or destroy such additive. Furthermore, moisture must be controlled in the prior art in order to prevent deterioration of the inherent nutritional ingredients from spoilage, requiring elaborate packaging materials and techniques to control moisture.

It would be desirable to provide a palatable edible product that functions as a delivery system for various nutritional, functional or pharmaceutical ingredients. Conventional products typically cannot deliver these ingredients because conventional products require significant heat processes and/or acidic conditions for stability. Such harsh conditions alter or destroy the delicate nutritional, functional, or pharmaceutical ingredients. Moreover, prior art products require moisture-controlling packaging that increase costs and reduce shelf-life. Products without these requirements thus would be advantageous.

### Summary of the Invention

The invention is as defined by the appended claims.

In a first aspect, the invention provides food products comprising a base food material having a plurality of surface pockets, wherein at least one surface pocket comprises a filling food material, and two closed ends comprising the base food material, wherein each of the surface pockets are connected by one or more longitudinal extent of the base food material, along a longitudinal aspect of the food product, that comprises a side of each of the surface pockets; the surface pockets are not in communication along a lateral aspect of the food product; and at least a portion of the filling food material is not encompassed by the base food material

In a second aspect, the invention provides methods for making composite food products having at least two food material components comprising, preparing a shaped base food material having a plurality of longitudinally arranged surface indentations in a predetermined arrangement; applying a filling food material in at least one surface indentation to provide a composite material; laterally closing the composite material at a plurality of predetermined closing positions to provide a closed composite material; and separating the closed composite material at the predetermined closing positions to yield the composite food product having two closed ends and a plurality of surface pockets, wherein the closed ends comprise the base food material; at least one surface pocket comprises the filling food material; each surface pocket shares a longitudinal extent of the base food material; and at least a portion of the filling food material is not encompassed by the base food material.

### Brief Description of the Drawings

**Figure 1** shows a cross-sectional view of an embodiment of the food product of the invention; the cross-section is taken from the plane that is parallel to the crimped faces of the product and passes through the center of the product.
**Figure 2** shows additional cross-sectional views of an embodiment of the food product of the invention; the middle cross-section is the same as **Figure 1****;** dotted lines **(1)** through **(3)** indicate the locations of cross-sectional views illustrated in the top (line **2**) and bottom (lines **1** and **3**) of the figure; the top and bottom cross-sections are on planes essentially normal to the crimped faces of the product **(400).**
**Figure 3** is a photograph illustrating two exemplary composite food products of the invention as illustrated **Figures 1** and **2****.**
**Figure 4** shows a cross-sectional view of an embodiment of a composite food product having eight surface pockets comprising first and second filling food materials **(200, 201);** the cross-section is taken from the plane that is parallel to the crimped faces of the product and passes through the center of the product.
**Figure 5** shows additional cross-sectional views .of the composite food product of **Figure 4****;** dotted lines **(1)** and **(2)** indicate the locations of cross-sectional views illustrated in the lower-left (line **1**) and lower right (line **2**) of the figure; the lower cross-sections are on planes essentially normal to the crimped faces of the product **(400).**
**Figure 6** shows a cross-sectional view of an embodiment of the food product of the invention where the base food material **(100)** comprises a first food material **(102)** that encompasses an extent of a second food material **(103).**
**Figure 7** shows additional cross-sectional views of the embodiment of the food product of the invention shown in **Figure 6****;** the middle cross-section is the same as **Figure 6****;** dotted lines **1** through **3** indicate the locations of cross-sectional views illustrated in the top (line **2**) and bottom (lines **1** and **3**) of the figure; the top and bottom cross-sections are on planes essentially normal to the crimped faces of the product **(400).**
**Figure 8** is a cross-sectional view of an embodiment of an X-shaped base food material taken essentially normal to an extruding direction and prior to application of a filling food material thereon.
**Figure 9** is a cross-sectional view of an embodiment of a composite food material, prior to crimping, taken essentially normal to the extruding direction of the shaped base food material where a filling food material has been applied thereon.
**Figure 10** is a cross-sectional view of a composite food material, prior to crimping, taken essentially normal to the extruding direction of the shaped base food material, having eight surface indentations thereon, where first and second filling food materials **(200, 201)** have been applied.
**Figure 11** is a cross-sectional view of a shaped base food material **(100),** taken essentially normal to the extruding direction of the shaped base food material, where the shaped base food material comprises a second food material **(103)** surrounded by a first food material **(102).**

### Detailed Description of the Invention

The composite food products of the invention comprise a base food material having a plurality of surface pockets, wherein at least one surface pocket comprises a filling food material, and two closed ends comprising the base food material, wherein each of the surface pockets are connected by one or more longitudinal extent of the base food material, along a longitudinal aspect of the food product, that comprises a side of each of the surface pockets and the surface pockets are not in communication along a lateral aspect of the food product.

As used herein, a "longitudinal extent" refers to a continuous linear portion of the referenced material that connects the two closed faces of the food product via the interior portion of the product. The interior portion of the product includes the base food material and those portions of the filling food material encompassed by the base food material; the exterior portion of the products includes those portions of the filling food material not encompassed by the base food material.

Likewise, a "lateral extent" is any continuous linear internal portion of the referenced material or product which is not parallel to the longitudinal extent. Generally, a "longitudinal aspect" of the food product is defined by the direction of a longitudinal extent of the base food material; likewise, a "lateral aspect" of the food product is defined by a lateral extent of the food product. It should be understood that the lateral and longitudinal aspects of the food products of the invention do not include those portions of the filling food material that are not encompassed by the base food material.

However, in certain aspects, the food products of the invention comprise a food material (e.g., the base food material) having a plurality of surface pockets and two closed ends, wherein each of the surface pockets are connected by one or more longitudinal extent of the food material, along a longitudinal aspect of the food product, that comprises a side of each of the surface pockets and the surface pockets are not in communication along a lateral aspect of the food product.

The base food material comprises a plurality of surface pockets, each having a substantially concave shape. Each of the surface pockets can independently have different depths and/or volumes, each of which can be the same or different. The base food material comprises a plurality of (*i*.*e.,* at least 2) surface pockets, for example, 2 to 16 surface pockets. In various other embodiments, the base food material comprises 2 to 8 surface pockets. In yet other embodiments, the base food material comprises 2 to 6 surface pockets. In still other embodiments, the base food material comprises 2 to 4 surface pockets. In still other embodiments, the base food material comprises 2 surface pockets.

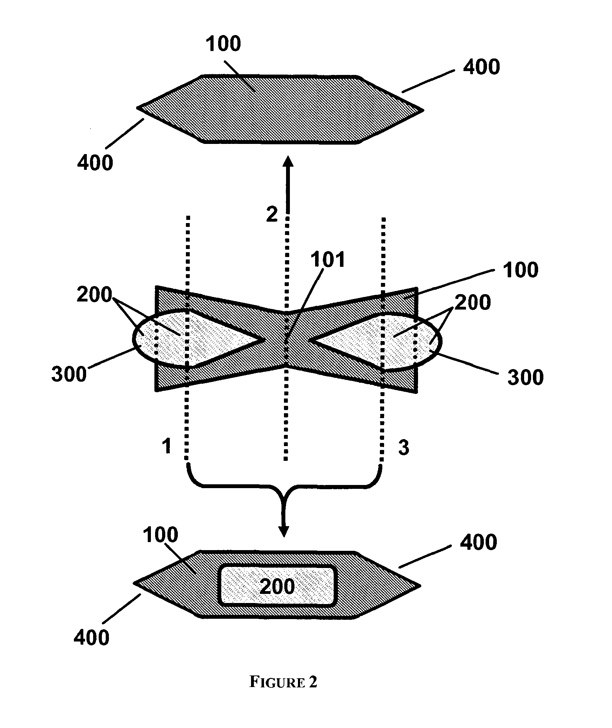

Each of the surface pockets share at least one longitudinal extent of the base food material that connects each of the surface pockets and forms a side of each of the surface pockets. Generally, the longitudinal extent is a continuous portion of the base food material that connects the closed faces. In certain embodiments, at least one longitudinal extent connects the two closed faces (*e.g., see,* line **(2)** in each of **Figures 2****,** **5** **and** **7****,** *infra*)*.*

The base food material can comprise one or more food materials and has sufficient pliability to be closed (*e.g*., crimped) according to methods familiar to one skilled in the art, and to hold the closure (*e.g.,* crimp) without separating. That is, the base food material also is sufficiently deformable (pseudoplastic) to allow reshaping of the same without reverting to a prior shape.

In certain embodiments, the base food material comprises at least one cooked food material having a composition that allows the material to be closed (*e.g*., crimped) to form the closed ends and to maintain the closed shape without separating or delaminating or otherwise reverting to a non-closed shape.

In certain other embodiments, the base food material comprises two or more food materials. In certain embodiments, at least one of the food materials is a cooked material. For example, the base food material may comprise a first food material and a center portion comprising a food material other than the first food material (*i.e.,* a second food material). In certain embodiments, those portions of the base food material that contact the filling food material comprise a cooked material. When the center portion of the base food material is wholly encompassed by the first food material (*i.e.,* not in contact with the filling food material), then the second food material can comprise an uncooked material or a cooked material. In one embodiment, the center portion of the base food material is wholly encompassed by the first food material (*i.e.,* not in contact with the filling food material), and the center portion of the base food material comprises an uncooked material.

The base food material can comprise a cereal based component and/or a protein source material as well as water and/or a humectant. Examples of the protein source material include, but are not limited to, eggs (*i.e.,* egg whites and/or yolk), whey, soy protein, pea protein vegetable protein sources such as glutens derived from wheat, rye, oats, corn, and/or barley, and meat protein sources such as raw meats (*e.g.*, chicken, beef, pork, seafood, lamb, venison, duck, buffalo), meat meals (*e.g.*, chicken meal, beef meal, fish meal), meat by-product meals (*e.g.*, beef liver meal, chicken liver meal), and mechanically deboned meat. Examples of cereal based components include, but are not limited to, wheat, rice, corn, tapioca, potato, barley, sorghum, millet, and flours thereof, *etc.* The cereal based components can be heat treated, precooked, pregelatinized, or toasted starches. Heat treatment or cooking can enhance gelatinization and binding action in the final product.

Exemplary humectants include, but are not limited to sucrose, sodium chloride, sorbitol, glycerine, starch hydrolysate, glucose, starch, maltose, lactose, gums, galactose, citric acid, alanine, glycine, high fructose corn syrup, tartaric acid, malic acid, xylose, PEG 400, PEG 600, propylene glycol, aminobutyric acid, mannitol, mannose, or lactulose.

Additionally, the base food material may comprise one or more scrubbers with rough and abrasive surface textures and rough and abrasive edges, yet are easy to digest. Non-limiting examples of the scrubbers useful in the present composition include toasted cereal, ground cereal, cereal bran, microcrystalline cellulose, and cellulose powder, although other substitutes may be used provided they possess the proper roughness and abrasiveness. Preferably, when toasted cereal is used, it is at 5%-20% (w/w) of the composition; when ground cereal is used, it is at 5%-20% (w/w) of the composition; when cereal bran is used, it is at 2%-10% (w/w) of the composition, and when microcrystalline cellulose or cellulose powder or a combination of microcrystalline cellulose and cellulose powder are used, they are at 0.2%-2% (w/w) of the composition. Specific examples of useful scrubbers include, but are not limited to, 1) toasted or precooked whole rice, toasted or precooked whole wheat, toasted or precooked sorghum, toasted or precooked millet, and toasted or precooked barley as non-limiting examples of toasted cereals; 2) ground rice, ground wheat, ground barley, ground corn, broken rice, broken wheat, broken barley, ground sorghum, ground millet, and broken corn as non-limiting examples of ground cereals; 3) oat bran, wheat bran, and rice hulls, as non-limiting examples of cereal bran.

Because a scrubber can be intimately involved in cleaning teeth via an abrasive action, the average particle size of the toasted cereal is preferably between 2 mm and 10 mm, the average particle size of the ground cereal is between 0.3 mm and 2 mm, the average particle size of the broken cereal is between 0.3 mm and 2 mm, the average particle size of the cereal bran is between 0.3 mm and 2 mm, and the average particle size of the microcrystalline cellulose is between 90 microns and 100 microns.

Other, finer particle scrubbers may be used which can act like a scour to clean teeth, such as one or more salt scrubbers. Non-limiting examples of salt scrubbers include calcium carbonate, dicalcium phosphate, titanium dioxide, although other substitutes may be used. Preferably, when calcium carbonate is used, it is at 0.5%-3% (w/w) of the composition; when dicalcium phosphate is used, it is at 0.5%-3% (w/w) of the composition; when titanium dioxide is used, it is at 0.02%-0.1% (w/w) of the composition. Preferably, when calcium carbonate is used, it has average particle size of between 200 and 700 microns; when dicalcium phosphate is used, it has an average particle size of between 0.2 mm and 2 mm.

The filling food materials can comprise cooked and/or uncooked food materials. In certain embodiments of the invention, the filling food material is an uncooked food material. For example, the filling food material can comprise lipids such as, for example, long or medium chain saturated or unsaturated, non-di, or tri-acylglycerols; simple and/or complex carbohydrates, such as sugars (e.g., glucose, and maltose syrups), and flours and/or starches of maize, wheat, rice, soy, sweet potatoes, fats; and protein source materials, as described above; and combinations thereof can be included. Additional ingredients can be, for example, nutritive, non-nutritive compounds, or combinations thereof.

The base and filling food materials can be used for delivering various nutritional, functional or pharmaceutical ingredients. Such additives can be effective to enhance pet skin or coat properties, improve breath odor, enhance the immune response functions, combat parasites, combat microbes or the additives can be an anti-inflammatory or antioxidant. For example a combination of such additives can include an anti-inflammatory, an antioxidant, an anti-parasite, a breath freshener, a skin coat enhancer, or a mixture thereof.

Suitable nutritional ingredients include, but are not limited to, mineral supplements, B vitamins, choline, and mixtures thereof, and can be added to any one or more of the base and/or filling food materials comprising the food product of the invention.

Further, suitable functional ingredients include, but are not limited to, herbal compounds, plant-based extracts or mixtures thereof. Other ingredients such as, for example, sulfur amino acids can be added as part of the solids in the base or filling food materials. Yet another aspect of the present invention provides a functional delivery system for breath improvement agents. Examples of suitable ingredients include but are not limited to such as rosemary, clove, and parsley seed oils. Such functional ingredients can be added to any one or more of the base and/or filling food materials comprising the food products of the invention.

Further, suitable pharmaceutical ingredients include, but are not limited to one or more antioxidant ingredients which may be nutritive or non-nutritive. Examples of nutritive antioxidants can include provitamin A carotenes, vitamin C, vitamin E, and mixtures thereof. Examples of provitamin A carotenes include all *trans* and *cis* beta-carotenes, all trans and cis alpha-carotenes, and all *trans* and *cis* gamma-carotenes. Examples of non-nutritive antioxidants can include non-provitamin A carotenes, anti-inflammatory agents, and mixtures thereof. Examples of non-provitamin A carotenes are beta-carotene, *trans*-lycopene, *cis-*lycopenes, phytofluene, phytoene, and curcumin. Examples of anti-inflammatory agents can include a fatty acid, a turmeric extract such as curcumin, and mixtures thereof. Such pharmaceutical ingredients can be added to any one or more of the base and/or filling food materials comprising the food product of the invention.

Any of the food materials comprising the base food material and/or filling food materials can also serve as a delivery system(s) for enhanced immune response agents. For example, evening primrose oil or echinacea can be added to the base and/or filling food materials. Further, the base and/or filling food materials can serve as a functional delivery system for parasite control agents. For example, pharmaceutical ingredients such as those effective against heartworm, intestinal worms, fleas, and/or ticks could be incorporated into the base and/or filling food materials of the present invention for easy administration. In another example, the base and/or filling food material can be a delivery system for antibiotics and/or prebiotics and/or probiotics for the maintenance of gastrointestinal health functions. Various antibiotics may be incorporated into the base and/or filling food material. Prebiotics such as inulin or frutooligosaccharide (FOS) can be incorporated as part of a solids mix blended with lipids. Probiotics, such as lyophilized lactobacillus or bifidobacterium can be added to the base and/or filling food materials. When incorporated into an uncooked food material the probiotics can have higher survival rates than when incorporated into conventional pet or animal food products. This is because the harsh sterilization process of conventional or animal food manufacturing is not required in the present invention. The lyophilized cells can thus remain dormant in, for example, a lipid matrix of the present invention and remain protected until the cells reach the GI tract where they can advantageously proliferate.

Any of the base and/or filling food materials may comprise other components, including, but not limited to, an oral care component, a nutrition supplement, a process aid, a preservative; an emulsifier; or any combination of the foregoing. Non-limiting examples of oral care components include monophosphate, triphosphate, polyphosphate, protein-bound zinc salts, amino acid-bound zinc salts, and any combination thereof. Non-limiting examples of nutritional supplements include sodium chloride, potassium chloride, choline chloride, a vitamin and mineral premix, and any combination thereof. Non-limiting examples of emulsifiers include gelatin, lecithin, egg yolk, and pectins. Non-limiting examples of process aids include monoglyceride, calcium stearate, water, and any combination thereof. Non-limiting examples of preservatives include potassium sorbates, sodium tripolyphosphate (Stpp), sulfates, water binders, and antioxidants. When any phosphate (mono, tri, or poly) is present, it is preferably present at about 0.4% to 0.8% (w/w) of the composition; when protein- or amino acid-bound zinc salts is present, it is preferably present at about 0.1% to 0.5% (w/w) of the composition, when sodium chloride is present, it is preferably present at about 0.2% to 0.8% (w/w) of the composition, when potassium chloride is present, it is preferably present at about 0.2% to 0.9% (w/w) of the composition, when choline chloride is present, it is preferably present at about 0.1% to 0.5% (w/w) of the composition, when vitamin and mineral premix is present, it is present at about 1.0% to 3% (w/w) of the composition, when monoglyceride is present, it is preferably present at about 1.0% to 5% (w/w) of the composition, when calcium stearate is present, it is preferably present at about 0.5% to 1.5% (w/w) of the composition, and when sorbates, sulfates, water binders, and antioxidants are present, they are preferably present at about 0.1% to 0.5% (w/w) of the composition.

Further, any of the base and/or filling food materials may also comprise fat for flavor and/or a source of essential fatty acids. In certain embodiments, the fat is present at 0.2%-5% (w/w) of the composition. Non-limiting examples of fat include vegetable oil (e.g., corn oil or flaxseed oil), poultry fat, tallow, and various combinations of these and other fats.

Coloring agents can be included in any of the base and/or filling food materials within the scope of the present invention to produce articles of a desired color. Suitable coloring agents may include but not limited to synthetic coloring agents and natural agents. The synthetic coloring agents may include but not limited to azo dyes such as Amaranth, ponceau 4R, Tartrazine, Sunset Yellow, Indigo Carmine. Natural coloring agents may include but not limited to xanthophyll, chlorophyll, and metallic oxides, such as iron oxide. In certain embodiments, the coloring agent is iron oxide or caramel color.

The composite food products of the invention can further comprise one or more palatants as a coating over the exterior of the product or as a part of the base and/or filling food materials, as are familiar to those skilled in the art, to encourage consumption of the same. The term "palatant" as used herein refers to one or more compounds or compositions known to those skilled in the art to increase the feeding response of an animal, including any known or commercially available liquid or dry palatant enhancers commercially available from pet food palatant enhancer or other flavor suppliers known to those of skill in the art, such as GOTAste^{™} and SAVORATE^{™}. Additional examples include, but are not limited to, lysine, phenylalanine, tyrosine, tryptophan, methionine, arginine, isoleucine, leucine, serine, poultry liver digest, and other animal proteins or simulated flavors. Although the flavor enhancer can be present at any level, when present, the preferred range is 2% (w/w) to 6% (w/w) of the composition.

In certain embodiments, any of the preceding components of the base and/or filling food materials, when the components are thermally sensitive (i.e., readily degraded by heating as understood by one skilled in the art), then those thermally sensitive components are part of portion of the base and/or filling food material which is uncooked. In various embodiments, the base food material comprises a cooked material and the filling food material comprises an uncooked food material, wherein any thermally sensitive food components are part of the filling food material.

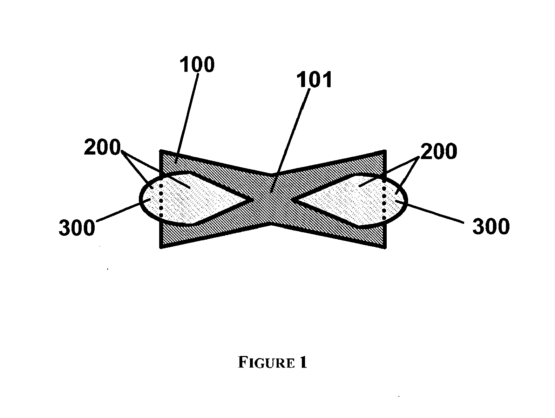

A cross-sectional view, taken essentially parallel to the closed ends *(i.e.,* the crimped ends) of an exemplary composite food product of the first aspect, is illustrated in **Figure 1****.** In this example, the product comprises a base food material **(100)** having two surface pockets formed therein which are each filled by a filling food material **(200).** Each of the surface pockets are generally concave and share a longitudinal extent **(101)** of the base food material that comprises a side of each of the surface pockets. As can be seen from the illustration, the two surface pockets are connected by the longitudinal extent **(101)** of the base food material such that the surface pockets are not in communication along a lateral aspect of the food product; *(i.e.,* the filling food material is not continuous along a lateral aspect of the composite food product). The dotted lines in **Figure 1** represent imaginary lines defining the outer extent of each of the surface pockets. At least a portion **(300)** of the filling food material **(200)** in at least one surface pocket is not wholly encompassed by the base food material. In the example of **Figure 1****,** a portion **(300)** of the filling food material **(200)** in each of the surface pockets is not wholly encompassed by the base food material **(100).**

The middle cross-sectional view in **Figure 2** illustrates the same cross-sectional view of the exemplary composite food product of **Figure 1****;** therein, lines **(1)** through **(3)** indicate cross-sections of the composite food product that are taken normal to the closed faces **(400)** thereof at various points across the composite food product. The lower cross-section of **Figure 2** corresponds to both lines **(1)** and **(3),** and shows a cross-section consistent with a filled food product, where the filling food material **(200)** is surrounded by the base food material **(100).** The upper cross-section of **Figure 2** corresponds to line **(2)** that passes through the longitudinal extent **(101,** **Figure 1****)** that connects the surface pockets and forms a side of each pocket. As can be seen in the upper cross-sectional view, along line (2), the composite food product consists of only the base food material, indicating that the surface pockets are not connected in a lateral aspect of the composite food product. As such, the composite food products of the invention externally appear to be a filled product where the filling is continuous throughout the interior of the product shell; however, in the products of the invention, the filling food material is not continuous throughout the interior of the shell *(i.e.,* the base food product), as discussed above.

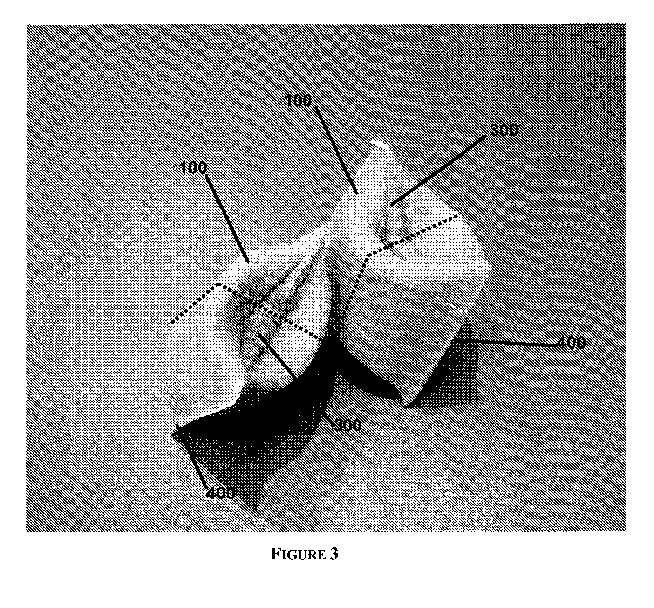

**Figure 3** shows two examples of the composite food product illustrated in **Figures 1** and 2. The dotted lines indicate the plane of the cross-sectional views, essentially parallel to the closed ends **(400),** as illustrated in **Figure 1****.** Each comprises a base food material **(100)** and a filling food material, where a portion of the filling food material **(300)** is not wholly encompassed by the base food material.

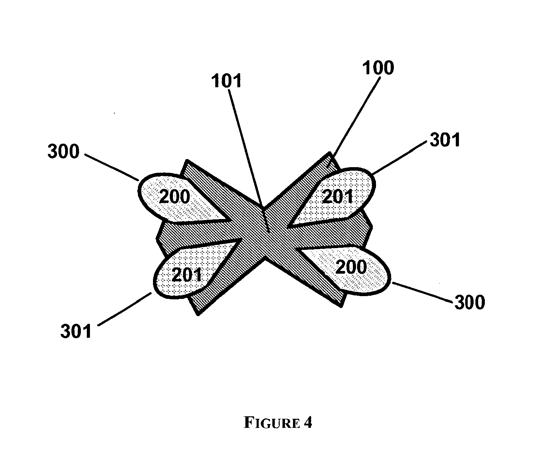

A cross-sectional view of another embodiment of the composite food product of the first aspect is illustrated in **Figure 4****,** taken parallel to the closed ends (*e.g*., the crimped ends). In this example, the product comprises a base food material **(100)** having four surface pockets formed therein which are each independently filled by a first filling food material **(200)** or a second filling food material **(201).** Each of the surface pockets are generally concave and share a longitudinal extent **(101)** of the base food material that comprises a side of each of the surface pockets. As can be seen from this illustration, the surface pockets are separated by the longitudinal extent of the base food material such that the pockets are not in communication in a lateral aspect (*i.e*., not connected along a lateral aspect of the composite food product). At least a portion **(300)** of the first filling food material **(200)** and at least a portion **(301)** of the second filling food material **(300)** in each surface pocket is not wholly encompassed by the base food material **(100).**

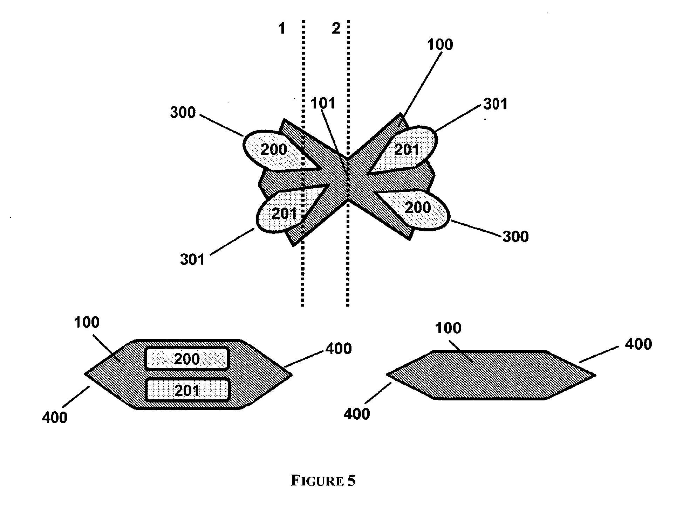

Two additional cross-sectional views of the exemplary product of **Figure 4** are illustrated in **Figure 5****.** Lines **(1)** and **(2)** indicate cross-sections of the composite food product that are taken normal to the closed faces **(400)** thereof at various points across the composite food product. The lower-left cross-section of **Figure 5** corresponds to line **(1)** and shows a cross-section consistent with a filled food product, where both the first filling food material **(200)** and the second filling food material **(300)** are surrounded by the base food material **(100).** The lower-right cross-section of **Figure 5** corresponds to line **(2)** that passes through the longitudinal extent **(101,** **Figure 1****)** that connects the surface pockets and forms a side of each pocket. As can be seen in the lower-right cross-sectional view, along line **(2),** the composite food product consists of only the base food material, indicating that the surface pockets are not connected along a lateral aspect of the composite food product.

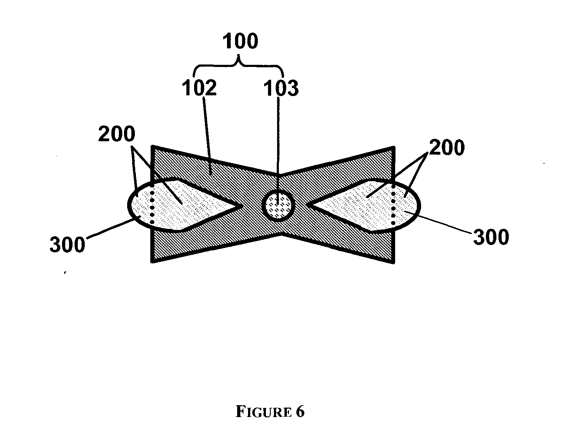

In another embodiment, the base food material **(100)** within the food product of the invention can comprise a first food material and a center portion comprising a food material other than the first food material *(i.e.,* a second food material), where the center portion is enveloped by the first food material. For example, in **Figure 6****,** a cross-sectional view of a composite food product of the first aspect taken parallel to the closed ends *(e.g.,* the crimped ends) is illustrated where the base food material **(100)** comprises a first food material **(102)** and a second food material **(103).** Along this view, the first food material **(102)** encompasses the second food material **(103).** The base food material **(100)** has two surface pockets formed therein which are each filled by a filling food material **(200).** The second food material **(103)** may comprise part of or all of the longitudinal extent of the base food material **(100)** that forms a part of each of the surface pockets. The cross-sectional shape of the second food material **(103)** may be formed according to methods known to those skilled in the art, for example, as is discussed in detail below.

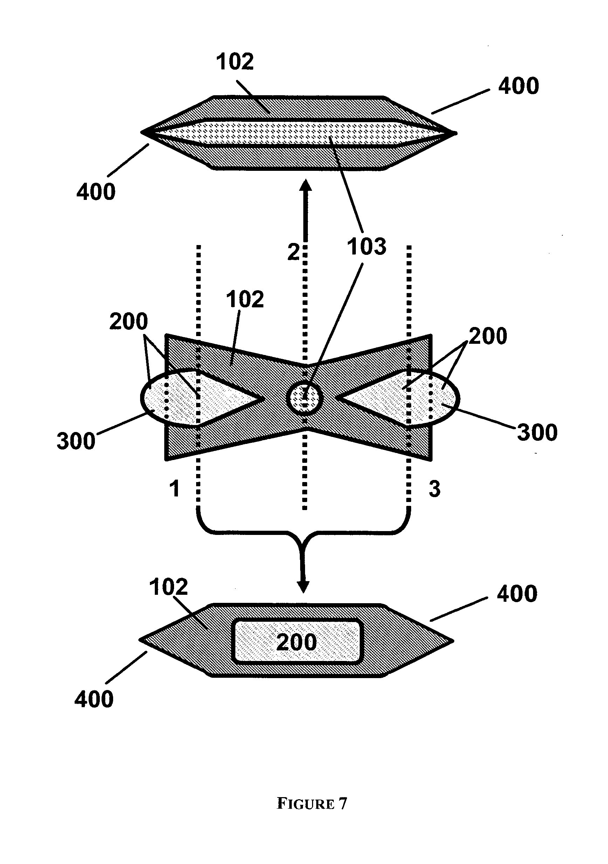

The middle cross-sectional view in **Figure 7** illustrates the same cross-sectional view of the exemplary composite food product of **Figure 6****.** Lines **(1)** through **(3)** indicate cross-sections of the composite food product that are taken normal to the closed faces **(400)** thereof at various points across the composite food product. The lower cross-section of **Figure 7** corresponds to both lines **(1)** and **(3),** and shows a cross-section consistent with a filled food product, where the filling food material **(200)** is surrounded by the base food material (*i.e.,* **102** and/or **103).** The upper cross-section of **Figure 7** corresponds to line **(2)** that passes through the longitudinal extent that connects the surface pockets and forms a side of each pocket. As can be seen in the upper cross-sectional view, along line **(2),** the composite food product comprises the second food material **(103)** encompassed by the first food material **(102);** further, the upper view indicates that the surface pockets are not connected along a lateral aspect of the composite food product.

Composite food products of the first aspect can be prepared according to methods comprising, preparing a shaped base food material having a plurality of longitudinally arranged surface indentations in a predetermined arrangement; applying a filling food material in at least one surface indentation to provide a composite material; laterally closing the composite material at a plurality of predetermined closing positions to provide a closed composite material; and separating the closed composite material at the predetermined closing positions to yield the composite food product having two closed ends and a plurality of surface pockets, wherein the closed ends comprise the base food material; at least one surface pocket comprises the filling food material; and each surface pocket shares a longitudinal extent of the base food material; wherein the closing provides a composite material having a decreased cross-sectional thickness with respect to the composite material.

The shaped base food material can be prepared by methods familiar to those skilled in the art. In one example, a base food material (as discussed previously) can be continuously formed, for example, by extrusion through a die plate, to yield a continuously shaped base food material having a predetermined shape comprising a plurality of longitudinally arranged surface indentations in a predetermined arrangement. Suitable die plates include, but are not limited those which can yield a shaped base food material having a cross-sectional shape that is a C, V, S, double S, multi-pointed star, or X- shape. In certain embodiments, a shaped base food material has a cross-sectional shape that is an S, double S, multi-pointed star, or X- shape. In certain other embodiments, a shaped base food material has a cross-sectional shape that is a multi-pointed star having from 4 to 16 points; preferably, the multi-pointed star has from 4 to 8 points.

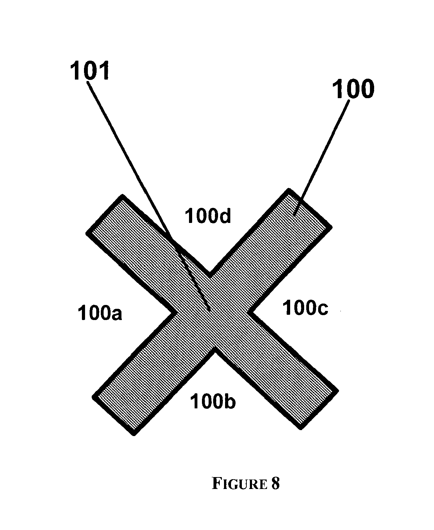

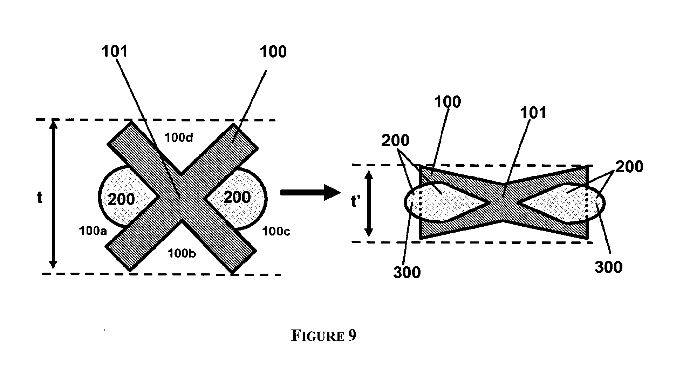

For example, an X-shaped base food material **(100)** is illustrated in **Figure 8****.** Therein, the X-shaped base food material **(100)** comprises 4 concave surface indentations **(100a, 100b, 100c, 100d)** and a longitudinal extent **(101)** that connects and forms a side of each of the indentations. After formation of the shaped base food material, a filling food material can be applied to at least one surface indentation thereof to provide a composite material. For example, **Figure 9** **(left)** shows a cross-section of a composite material comprising the X-shaped base food material of **Figure 8** where a filling food material **(200)** has been applied to surface indentations **100a** and **100c.** The filling food material can be applied to any one or more of the surface indentations of the shaped base food material by pumping the second material thereon, or other methods familiar to those skilled in the art. In certain embodiments, the shaped base food material and filling food material can be co-extruded to essentially simultaneously form the shaped base food material and apply the filling food material to the surface indentations thereon.

Each of the closed ends can be formed according to methods familiar to those skilled in the art. For example, the closed ends can be formed via crimping, pressing, gathering, stamping, twisting, rolling, squeezing, and/or bending of the composite material. In certain embodiments, the closed ends are formed by crimping. For example, the composite material of **Figure 9** **(left)** can be laterally crimped at a plurality of predetermined crimping positions along a longitudinal aspect of the composite material to provide a crimped composite material (*e.g*., **Figure 9****, right).** Generally, the "longitudinal aspect" of the composite material is defined by the direction of the surface indentations. As used herein, a composite material is closed "laterally" when the material is closed along any direction not parallel to the direction of the surface indentations (i.e., not parallel to the longitudinal aspect of the composite material. In certain embodiments, the composite material is closed (e.g., crimped) along a lateral aspect of the composite material that is not normal to the longitudinal aspect of the composite material. In certain other embodiments, the composite material is closed (e.g., crimped) along a lateral aspect of the composite material that is essentially normal to the longitudinal aspect of the composite material.

In certain embodiments, the crimped composite material can have a reduced thickness along the crimping direction, as shown in **Figure 9** *(i.e.,* t' < t). The crimping forms crimped locations at each of the predetermined crimping positions along a longitudinal extent of the composite material. Laterally crimping the composite material of **Figure 9****,** can yield a crimped composite material having the cross-sections illustrated in **Figures 1** and **2****.**

The closed *(e.g.,* crimped) composite materials can be separated at each of the closed positions to yield the composite food product having two closed ends and a plurality of surface pockets. Separating the closed composite material at each of the closed positions yield the composite food product illustrated in **Figure 3****.** In various embodiments, the closing and separating can occur essentially simultaneously. In various embodiments, the closing is crimping and the closing and separating occur essentially simultaneously. Closing and separating occurring "essentially simultaneously" is meant to include those closing actions which also serve to separate the composite products in a single action. For example, crimping the composite material can close and separate the composite food products via a single action.

The closing can be adjusted as is familiar to one skilled in the art to form the plurality of closed positions based on, in part, the composition of the base food materials and/or filling food materials. In particular, those base food materials having sufficiently high lipid and/or fat contents may require, of example, crimping to form crimped positions having larger surface areas to provide the sealed ends that are part of the ultimate product of the invention. Further, the location of the closing, for example, in the workflow of a processing line can be placed at a suitable position with respect to the location at which the shaped base food material is formed and/or the filling food material is applied onto the surface indentations of the shaped base food material. Such a suitable position may be chosen taking into consideration the properties of the shaped base food material (e.g., recipe of the shaped base food material), as well as the ultimate properties of a desired end product. For example, for an expanded product, as is familiar to those skilled in the art, the closing can be located at a position suitably distant from formation of the composite food material and/or formation of the shaped base food material to allow an extruded shaped base food material to expand and at least partially relax prior to crimping.

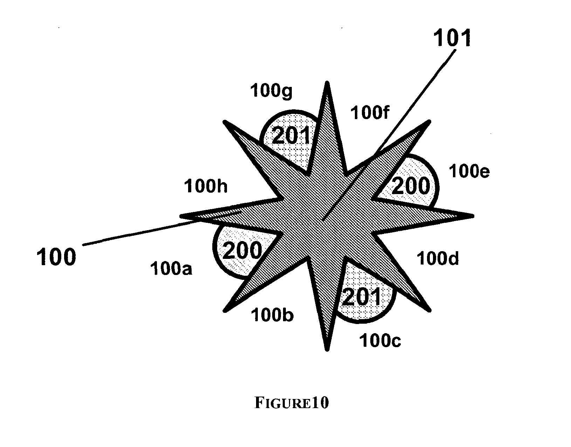

In another example, **Figure 10** illustrates a cross-section of a composite material comprising a star-shaped base food material **(100)** where first and second filling food materials (**200** and **201**) have been applied to surface indentations **100a** and **100e;** and **100c** and **100g,** respectively. Each filling food material can be applied to any one or more of the surface indentations of the shaped base food material by pumping the second material thereon, or other methods familiar to those skilled in the art. In certain embodiments, the shaped base food material and filling food materials can be co-extruded to essentially simultaneously form the shaped base food material and apply the filling food materials to the surface indentations thereon.

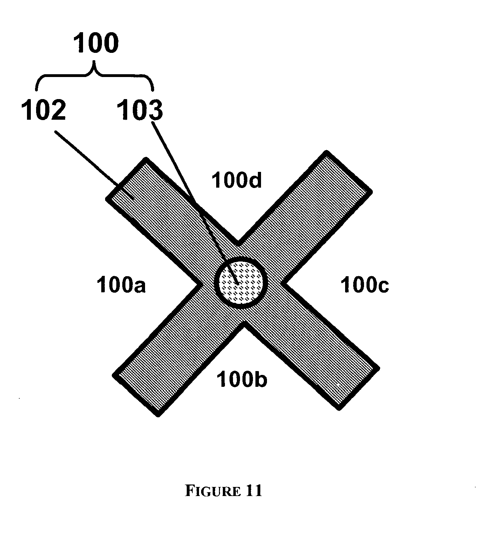

In another example, an X-shaped base food material **(100)** is illustrated in **Figure 11** where the shaped base food material **(100)** comprises a first food material **(102)** and a center portion **(103)** comprising a food material *(i.e.,* a second food material) other than the first food material **(102),** and which is encompassed by the first food material **(102).** The shaped base food material in **Figure 11** can be prepared by methods familiar to those skilled in the art. In one example, the first food material **(102)** and the center portion **(103)** can be co-extruded through a die plates to yield the X-shaped base food material **(100)** having the center portion **(103)** encompassed by the first food material **(102)** and having a predetermined shape comprising a plurality of longitudinally arranged surface indentations **(100a, 100b, 100e, 100d)** in a predetermined arrangement. The cross sectional shape of the center portion of the shaped base food material can be determined by, for example, the shape of die plate utilized for co-extruding the center portion. For example, the center portion of the shaped base food material can have a cross-sectional shape that is a circle, square, bone-shaped, or paw-shaped, among others. The surface indentations can be filled as described previously to provide a composite material. The center portion **(103)** of the shaped base food material may contact the filling food material **(200)** that ultimately fills the surface indentations, although, in the preceding example, the center portion **(103)** is wholly encompassed by the first food material **(102).**

Similarly, a composite material comprising the star-shaped base food material of **Figure 10** can be laterally closed to yield a closed composite material having the cross-sections illustrated in **Figures 4** and **5****.** Separating the closed composite material at each of the closed positions can yield a composite food product which is visually similar or identical to those products illustrated in **Figure 3****.**

Similarly, a composite material comprising the X-shaped base food material of **Figure 11** can be laterally closed to yield a closed composite material having the cross-sections illustrated in **Figures 6** and **7****.** Separating the closed composite material at each of the closed positions can yield a composite food product which is visually similar or identical to those products illustrated in **Figure 3****.**

In another example, the shaped base food material can comprise two or more food materials *(i.e.,* a first food material and, at least, a second food material), where when the composite food material formed therefrom is closed, the closed ends comprise at least two of the food materials comprising the shaped base food material. For example, an X-shaped base food material can comprise a first food material and a second food material which are co-extruded to form the X-shaped base food material. In one embodiment, a first portion of the X-shaped base food material comprises the first food material and a second portion of the X-shaped base food material comprises the second food material. In various embodiments, the first and second portions of the X-shaped base food material are defined by a line through the center of the X-shaped base food material. In various embodiments, the X-shaped base food material comprises four arms radiating from the center of the shaped material, where two of the arms of the X-shaped base food material comprise the first food material and the other two arms comprise the second food material. In various other embodiments, the X-shaped material comprises four arms radiating from the center of the shaped base food material, where a first arm of the X-shaped base food material comprises the first food material, the arm linearly connected to first arm through the center of the shaped material comprises the second food material, and the other two arms each comprise the first and second food materials. The preceding may also be applied to other shaped described herein, such as the S, double S, and multi-pointed star shaped base food materials. Each of the shaped base food materials may be sectioned into 2 or more portions via lines through the center of the shaped base food material, where each portion formed by said lines independently comprises a food material (e.g., a first and second, third, *etc.* food material)

In certain embodiments of the invention, at least a portion of the shaped base food material can be cooked prior to either (i) application of the filling food material to form the composite material; or (ii) closing of the composite material. In other embodiments, the base and filling food materials can each comprise one or more uncooked food materials, and the composite material can be cooked in whole or in part after application of the filling food material and/or after closing of the composite material. In certain embodiments, the shaped base food material comprises a cooked material. In one particular embodiment, the base food material is extruded as a cooked material to form the shaped base food material onto which the filling food material is applied as discussed above.

Generally, the filling food material can be applied to the surface indentations of the shaped base food material in a fluid state *(e.g.,* liquid, paste, *etc*.); such compositions can be heat set after application to provide increased cohesiveness of the filling food material and/or to prevent the filling food material from flowing out of the surface pockets in the ultimate composite product. As would be clear to one skilled in the art, while the examples described herein have illustrated, for example, one or two filling food materials applied to the surface indentations of the base food material, there is no limitation to the number of filling food materials which may be used with the methods of the invention or which form part of the food products of the invention. For example, each surface indentation, and thus each surface pocket, may independently comprise the same or a different filling food material; likewise, each surface indentation, and thus each surface pocket, may independently comprise a plurality *(e.g.,* 2, 3, 4, etc.) of filling food materials.

The present composite food products can function as a palatable edible product that functions as a delivery system for various nutritional, functional or pharmaceutical ingredients. For example, the filling food material can comprise various nutritional, functional or pharmaceutical ingredients that can be applied to the surface indentations of the shaped base food material after cooking of the base food material, thereby avoiding exposing elements of the filling food material to harsh conditions, such as significant heat processes and/or acidic conditions, that can alter or destroy the delicate nutritional, functional, or pharmaceutical ingredients.

### Examples

### Example 1

One embodiment of the present invention is a product having a shape as shown in **FIGS. 1** and **2****,** having base and filling food materials **100** and **200,** respectively. An exemplary example of a recipe of ingredients for a base food material **100** is listed in Table 1.

| **Table 1** | |
|---|---|
| Flour | 68.900 |
| Salt | 1.000 |
| Water | 11.400 |
| Fat | 2.970 |
| Sodium Metabisulphite | 0.030 |
| Sugar | 6.900 |
| Flavor | 5.400 |
| Calcium | 3.400 |
| **Total** | **100.000** |

The materials from Table 1 are combined and extruded in a cooking-extruder to provide a shaped base food material having a X shaped cross-section. To opposing surface indentations of the X-shaped base food material, a filling food material is applied to give a composite material. An exemplary example of a starch based recipe of ingredients for the filling food material **200** is listed in Table 2. The composite material is laterally crimped with respect to the extrudate direction, and separated at the crimped locations to yield a product similar to **FIG 3****.**

| **Table 2** | | | | |
|---|---|---|---|---|
| | Ingredient | % | mixing step | |
| 1 | Maltose syrup | 77.4 | Step 1 | |
| 2 | Emulsyfire | 0.6 | | step2 |
| 3 | Maize Starch | 22 | | |
| **Total** | | **100** | | |

### Example 2

Another embodiment of the present invention is a product prepared according to Example 1, where the recipe of ingredients for base food material **100** is listed in Table 3.

| **Table 3** | |
|---|---|
| Gelatin | 18.00 |
| Wheat Protein | 18.00 |
| Soy Protein | 15.28 |
| Sodium Caseinate | 8.50 |
| Flavor | 2.50 |
| Vitamin Mix | 1.40 |
| Stpp | 1.00 |
| Lecithin | 1.00 |
| Flaxseed | 1.00 |
| Magnesium Monosterate | 0.90 |
| Lauricid | 0.70 |
| Potassium Sorbate | 0.60 |
| Sodium Copper Chlorophyllin | 0.02 |
| Glycerine | 17.50 |
| Water | 9.20 |
| Lycasine | 2.80 |
| Corn Oil | 1.60 |
| **Total** | **100.00** |

### Example 3

Another embodiment of the present invention is a product prepared according to Example 1, where the recipe of ingredients for base food material **100** is listed in Table 4.

| **Table 4** | |
|---|---|
| Rice Flour | 33.000 |
| Wheat Starch | 19.000 |
| Glycerine | 14.000 |
| Water | 7.000 |
| Calcium Carbonate | 5.500 |
| Gelatin | 5.500 |
| Gum | 5.300 |
| Ctmp | 3.000 |
| Digest | 3.000 |
| Stpp | 2.000 |
| Potassium Chloride | 1.000 |
| Salt | 1.000 |
| Vitamin Preblend | 0.300 |
| Potassium Sorbate | 0.200 |
| Choline Chloride | 0.200 |
| **Total** | **100.000** |

### Example 4

Another embodiment of the present invention is a product prepared according to Example 1, where the recipe of ingredients for base food material **100** is listed in Table 5.

| **Table 5** | |
|---|---|
| Rice Flour | 58.000 |
| Water | 13.000 |
| Wheat Flour | 4.400 |
| Glycerine | 6.000 |
| Ctmp | 5.200 |
| Sugar | 5.000 |
| Digest | 0.100 |
| Potassium Sorbate | 0.200 |
| Calcium Carbonate | 0.800 |
| Propylene Glycol | 2.900 |
| Stpp | 1.500 |
| Salt | 0.500 |
| Potassium Chloride | 0.700 |
| Choline Chloride | 0.100 |
| Vitamin Preblend | 0.600 |
| Sodium Caseinate | 1.000 |
| **Total** | **100.000** |

### Example 4

Another embodiment of the present invention is a product prepared according to Example 1, where the recipe of ingredients for base food material **100** is listed in Table 6.

| **Table 6** | |
|---|---|
| Wheat Flour | 24.000 |
| Soy Flour | 23.000 |
| Glycerine | 18.200 |
| Water | 20.000 |
| Sugar | 4.200 |
| Gluten | 2.600 |
| Gelatin | 2.300 |
| Cooked Chicken, Spray Dried | 2.200 |
| Calcium Carbonate | 1.700 |
| Digest | 0.800 |
| Salt | 0.800 |
| Potassium Sorbate | 0.200 |
| **Total** | **100.000** |

### Example 5

Another embodiment of the present invention is a product prepared according to Example 1, where the recipe of ingredients for base food material **100** is listed in Table 7.

| **Table 7** | |
|---|---|
| Corn | 40.000 |
| By-Product Meal | 31.375 |
| Rice | 12.500 |
| Wheat | 6.000 |
| Fish Meal | 0.500 |
| Corn Gluten | 7.000 |
| Salt | 0.400 |
| Pet-Ox | 0.025 |
| Vitamin Mix | 2.200 |
| **Total** | **100.000** |

### Example 6

Another embodiment of the present invention is a product prepared according to Example 1, where the recipe of ingredients for base food material **100** is listed in Table 8.

| **Table 8** | |
|---|---|
| Wheat Flour | 68.900 |
| Salt | 1.000 |
| Water | 11.400 |
| Fat | 2.970 |
| Sodium Metabisulphite | 0.030 |
| Sugar | 6.900 |
| Digest | 5.400 |
| Calcium | 3.400 |
| **Total** | **100.000** |

### Example 7

Another embodiment of the present invention is a product prepared according to Example 1, where the recipe of ingredients for base food material **100** is listed in any one of Tables 1 and 3 - 8, and the recipe for the filling food material is listed in Table 9.

| **Table 9** | | | |
|---|---|---|---|
| | Ingredient | % | mixing step |
| 1 | Egg whites | 20.81 | step 1 |
| 2 | Wheat flour | 15.77 | |
| 3 | Icing sugar | 10.4 | |
| 4 | Iodized salt | 5.2 | |
| 5 | Propylene Glycol | 18.2 | |
| 6 | Water | 29.62 | |
| **Total** | | **100** | |

### Example 8

Another embodiment of the present invention is a product prepared according to Example 1, where the recipe of ingredients for base food material **100** is listed in any one of Tables 1 and 3 - 8, and the recipe for the filling food material is listed in Table 10.

| **Table 10** | | | |
|---|---|---|---|
| 1 | Egg White | 9.94 | mixing step |
| 2 | All Purpose Wheat Flour | 23.53 | step 1 |
| 3 | Sweet Potato Starch | 24.02 | |
| 4 | Potassium Sorbate | 0.45 | |
| 5 | Salt | 4.48 | |
| 6 | Glycerine | 12.46 | |
| 7 | Water | 24.88 | |
| 8 | Liquid Chlorophyll | 0.23 | |
| **Total** | | **100.00** | |

### Example 9

Another embodiment of the present invention is a product prepared according to Example 1, where the recipe of ingredients for base food material **100** is listed in any one of Tables 1 and 3 - 8, and the recipe for the filling food material is listed in Table 11.

| **Table 11** | | |
|---|---|---|
| 1 | Egg White | 9.94 |
| 2 | All Purpose Wheat Flour | 23.79 |
| 3 | Sweet Potato Starch | 24.00 |
| 4 | Potassium Sorbate | 0.45 |
| 5 | Salt | 4.48 |
| 6 | Glycerine | 12.46 |
| 7 | Water | 24.88 |
| **Total** | | **100.00** |

### Example 10

Another embodiment of the present invention is a product prepared according to Example 1, where the recipe of ingredients for base food material **100** is listed in any one of Tables 1 and 3 - 8, and the recipe for the filling food material is listed in Table 12.

| **Table 12** | | |
|---|---|---|
| | **Ingredients** | **%** |
| 1 | Chicken Meal | 20.85 |
| 2 | Gelatin | 13.82 |
| 3 | Wheat Protein | 10.97 |
| 4 | Rice | 10.00 |
| 5 | Soy Protein | 9.60 |
| 6 | Modified and or native starch | 6.20 |
| 7 | Wheat Flour | 9.50 |
| 8 | Flaxseed | 3.70 |
| 9 | Sugar | 3.59 |
| 10 | Sodium Caseinate | 2.72 |
| 11 | Flavor | 2.00 |
| 12 | Vitamin mix | 1.80 |
| 13 | Lecithin | 1.60 |
| 14 | Flaxseed | 1.20 |
| 15 | Yeast | 1.00 |
| 16 | Acidifier | 0.55 |
| 17 | Potassium Sorbate | 0.48 |
| 18 | Citric acid | 0.40 |
| 19 | Anti-oxidant | 0.03 |
| | **TOTAL** | **100.00** |

## Claims

1. A food product comprising:
(i) a base food material (100) having a plurality of surface pockets,
wherein at least one surface pocket comprises a filling food material (200), and (ii) two closed ends (400) comprising the base food material (100), wherein each of the surface pockets are connected by one or more longitudinal extent (101) of the base food material (100), along a longitudinal aspect of the food product, that comprises a side of each of the surface pockets;
the surface pockets are not in communication along a lateral aspect of the food product; and
at least a portion of the filling food material (200) is not encompassed by the base food material (100).

2. The food product of claim 1, wherein the base food material (100) comprises a first food material (102) and a center portion comprising a food material other than the first food material.

3. The food product of claim 1, wherein the base food material (100) is a cooked food material or an uncooked food material.

4. The food product of claim 1, comprising two to four, two to six, two to eight or two to sixteen surface pockets.

5. The food product of claim 1, wherein the base food material (100) comprises a cereal based component or a protein source material, and water or a humectant.

6. The food product of claim 1, wherein the filling food material (200) comprises a protein source material or a carbohydrate source material, and optionally, one or more nutritional, functional, or pharmaceutical ingredients.

7. A method for making the food product as claimed in any one of claims 1 to 6, comprising, preparing a shaped base food material having a plurality of longitudinally arranged surface indentations in a predetermined arrangement; applying a filling food material (200) in at least one surface indentation to provide a composite material; laterally closing the composite material at a plurality of predetermined closing positions to provide a closed composite material; and separating the closed composite material at the predetermined closing positions to yield the composite food product.

8. The method of claim 7, wherein the closing provides a closed composite material having a decreased cross-sectional thickness with respect to the composite material or wherein the closing and separating occur essentially simultaneously, or further comprising at least partially cooking the composite food product, or wherein the preparing and applying comprises co-extruding the filling food material into one or more indentations in the surface of the shaped base food material.

9. The method of claim 7, wherein the shaped base food material has a cross-sectional shape that is a C, V, S, double S, multi-pointed star, or X- shape.

10. The method of claim 7, wherein the shaped base food material comprises a first food material (102) and a center portion (103) comprising a food material other than the first food material.

11. The method of claim 7, wherein the shaped base food material is a cooked food material.

12. The method of claim 7, wherein the filling food material is an uncooked food material.

13. The method of claim 7, wherein the shaped base food material has a cross-sectional shape that is an X- shape and comprises a cooked food material, optionally wherein the filling food material (200) is applied to two surface indentations and is an uncooked food material.

14. The method of claim 7, wherein the shaped base food material has a cross-sectional shape that is a multi-pointed star shape and comprises a cooked food material.

## Patentansprüche

1. Nahrungsmittelprodukt, das Folgendes enthält:
(i) ein Nahrungsmittel-Basismaterial (100), das eine Vielzahl von Oberflächentaschen aufweist, wobei mindestens eine Oberflächentasche ein Nahrungsfüllmaterial (200) enthält, und
(ii) zwei geschlossene Enden (400), die das
Nahrungsmittel-Basismaterial (100) umfassen,
wobei jede der Oberflächentaschen durch eine oder mehrere Längsausdehnungen (101) des Nahrungsmittel-Basismaterials (100) entlang einer Längsseite des Nahrungsmittelprodukts verbunden ist, die eine Seite jeder der Oberflächentaschen umfasst;
die Oberflächentaschen nicht entlang einer Querseite des Nahrungsmittelprodukts in Verbindung stehen; und mindestens ein Teil des Nahrungsfüllmaterials (200) nicht von dem Nahrungsmittel-Basismaterial (100) umgeben wird.

2. Nahrungsmittelprodukt nach Anspruch 1, wobei das Nahrungsmittel-Basismaterial (100) ein erstes Nahrungsmaterial (102) enthält und einen zentralen Anteil, der ein anderes Nahrungsmaterial als das erste Nahrungsmaterial enthält.

3. Nahrungsmittelprodukt nach Anspruch 1, wobei das Nahrungsmittel-Basismaterial (100) ein gekochtes Nahrungsmaterial oder ein ungekochtes Nahrungsmaterial ist.

4. Nahrungsmittelprodukt nach Anspruch 1, das zwei bis vier, zwei bis sechs, zwei bis acht oder zwei bis sechzehn Oberflächentaschen enthält.

5. Nahrungsmittelprodukt nach Anspruch 1, wobei das Nahrungsmittel-Basismaterial (100) eine Komponente auf Getreidebasis oder ein Proteinquellenmaterial enthält, sowie Wasser oder ein Feuchthaltemittel.

6. Nahrungsmittelprodukt nach Anspruch 1, wobei das Nahrungsfüllmaterial (200) ein Proteinquellenmaterial oder ein Kohlenhydratquellenmaterial enthält und wahlweise einen oder mehrere alimentäre, funktionelle oder pharmazeutische Inhaltsstoffe.

7. Verfahren zur Herstellung des Nahrungsmittelprodukts wie in einem der Ansprüche 1 bis 6 beansprucht, welches das Herstellen eines gestalteten Nahrungsmittel-Basismaterials umfasst, das eine Vielzahl in der Längsausdehnung angeordnete Oberflächenvertiefungen in einer vorgegebenen Anordnung aufweist; das Hinzufügen eines Nahrungsfüllmaterials (200) in mindestens eine Oberflächenvertiefung, um ein Verbundmaterial vorzusehen; das seitliche Verschließen des Verbundmaterials an einer Vielzahl von vorgegebenen Verschlusspositionen, um ein geschlossenes Verbundmaterial vorzusehen; und das Abtrennen des geschlossenen Verbundmaterials an den vorgegebenen Verschlusspositionen, um ein Verbundnahrungsmittelprodukt zu ergeben.

8. Verfahren nach Anspruch 7, wobei das Verschließen ein geschlossenes Verbundmaterial vorsieht, das gegenüber dem Verbundmaterial eine verringerte Querschnittsdicke aufweist oder wobei das Verschließen und Trennen im Wesentlichen gleichzeitig stattfinden, oder das ferner das mindestens teilweise Kochen des Verbundnahrungsmittelprodukts umfasst, oder wobei das Herstellen und Hinzufügen das Co-Extrudieren des Nahrungsfüllmaterials in eine oder mehrere Vertiefungen in der Oberfläche des gestalteten Nahrungsmittel-Basismaterial umfasst.

9. Verfahren nach Anspruch 7, wobei das gestaltete Nahrungsmittel-Basismaterial eine Querschnittsgestalt aufweist, welche die Gestalt eines C, V, S, Doppel-S, vielzackigen Sterns oder X annimmt.

10. Verfahren nach Anspruch 7, wobei das gestaltete Nahrungsmittel-Basismaterial ein erstes Nahrungsmaterial (102) enthält und einen zentralen Anteil (103), der ein anderes Nahrungsmaterial als das erste Nahrungsmaterial enthält.

11. Verfahren nach Anspruch 7, wobei das gestaltete Nahrungsmittel-Basismaterial ein gekochtes Nahrungsmaterial ist.

12. Verfahren nach Anspruch 7, wobei das Nahrungsfüllmaterial ein ungekochtes Nahrungsmaterial ist.

13. Verfahren nach Anspruch 7, wobei das gestaltete Nahrungsmittel-Basismaterial eine Querschnittsgestalt aufweist, die eine X-Gestalt annimmt und ein gekochtes Nahrungsmaterial enthält, wahlweise wobei das Nahrungsfüllmaterial (200) zu zwei Oberflächenvertiefungen hinzugefügt wird und ein ungekochtes Nahrungsmaterial ist.

14. Verfahren nach Anspruch 7, wobei das gestaltete Nahrungsmittel-Basismaterial eine Querschnittsgestalt aufweist, die eine vielzackige Sterngestalt annimmt und ein gekochtes Nahrungsmaterial enthält.

## Revendications

1. Produit alimentaire comprenant :
(i) un matériau alimentaire de base (100) ayant une pluralité de poches superficielles, dans lequel au moins une poche superficielle comprend un matériau alimentaire de garnissage (200), et
(ii) deux extrémités fermées (400) comprenant le matériau alimentaire de base (100),
dans lequel chacune des poches superficielles est reliée par un ou plusieurs prolongements longitudinaux (101) du matériau alimentaire de base (100), le long d'une dimension longitudinale du produit alimentaire, qui comprend un côté de chacune des poches superficielles ;
les poches ne sont pas en communication le long d'une dimension latérale du produit alimentaire ; et
au moins une partie du matériau alimentaire de garnissage (200) n'est pas enveloppée par le matériau alimentaire de base (100).

2. Produit alimentaire selon la revendication 1, dans lequel le matériau alimentaire de base (100) comprend un premier matériau alimentaire (102) et une partie centrale comprenant un matériau alimentaire autre que le premier matériau alimentaire.

3. Produit alimentaire selon la revendication 1, dans lequel le matériau alimentaire de base (100) est un matériau alimentaire cuit ou un matériau alimentaire non cuit.

4. Produit alimentaire selon la revendication 1, comprenant deux à quatre, deux à six, deux à huit ou deux à seize poches superficielles.

5. Produit alimentaire selon la revendication 1, dans lequel le matériau alimentaire de base (100) comprend un composant à base de céréales ou un matériau source de protéines et de l'eau ou un agent humidifiant.

6. Produit alimentaire selon la revendication 1, dans lequel le matériau alimentaire de garnissage (200) comprend un matériau source de protéines ou un matériau source de glucides et, éventuellement un ou plusieurs ingrédients nutritionnels, fonctionnels ou pharmaceutiques.

7. Procédé de fabrication du produit alimentaire selon l'une quelconque des revendications 1 à 6, comprenant la préparation d'un matériau alimentaire de base façonné ayant une pluralité d'entailles superficielles disposées longitudinalement selon une disposition prédéterminée ; l'application d'un matériau alimentaire de garnissage (200) dans au moins une entaille superficielle pour fournir un matériau composite ; la fermeture latérale du matériau composite à une pluralité des positions de fermeture prédéterminées pour fournir un matériau composite fermé ; et la séparation du matériau composite fermé au niveau des positions de fermeture prédéterminées pour produire le produit alimentaire composite.

8. Procédé selon la revendication 7, dans lequel la fermeture fournit un matériau composite fermé ayant une épaisseur en coupe droite réduite par rapport au matériau composite ou dans lequel la fermeture et la séparation ont lieu essentiellement simultanément, ou comprenant en outre la cuisson au moins partielle du produit alimentaire composite, ou dans lequel la préparation et l'application comprennent la co-extrusion du matériau alimentaire de garnissage dans une ou plusieurs entailles à la surface du matériau alimentaire de base façonné.

9. Procédé selon la revendication 7, dans lequel le matériau alimentaire de base façonné a une forme en coupe droite qui est sous forme de C, de V, de S ou double S, d'étoile à plusieurs branches ou de X.

10. Procédé selon la revendication 7, dans lequel le matériau alimentaire de base façonné comprend un premier matériau alimentaire (102) et une partie centrale (103) comprenant un matériau alimentaire autre que le premier matériau alimentaire.

11. Procédé selon la revendication 7, dans lequel le matériau alimentaire de base façonné est un matériau alimentaire cuit.

12. Procédé selon la revendication 7, dans lequel le matériau alimentaire de garnissage est un produit alimentaire non cuit.

13. Procédé selon la revendication 7, dans lequel le matériau alimentaire de base façonné a une forme en coupe droite qui est sous forme de X et comprend un matériau alimentaire cuit, éventuellement dans lequel le matériau alimentaire de garnissage (200) est appliqué sur deux entailles superficielles et est un matériau alimentaire non cuit.

14. Procédé selon la revendication 7, dans lequel le matériau alimentaire de base façonné a une forme en coupe droite qui est sous forme d'étoile à plusieurs branches et comprend un matériau alimentaire cuit.
